# EUROPÄISCHE PATENTSCHRIFT

(11) **EP 2 296 804 B1**
(45) Veröffentlichungstag und Bekanntmachung des Hinweises auf die Patenterteilung: **12.03.2014**
(21) Anmeldenummer: 09753540.5
(22) Anmeldetag: 27.05.2009
(51) Int. Cl.: B01J 12/00, C01B 33/107

(54) **HALOGENIERTES POLYSILAN UND THERMISCHES VERFAHREN ZU DESSEN HERSTELLUNG**
HALOGENATED POLYSILANE AND THERMAL PROCESS FOR PRODUCING THE SAME
POLYSILANE HALOGÉNÉ ET SON PROCÉDÉ THERMIQUE DE PRODUCTION

(30) Priorität: 27.05.2008 DE 102008025260
(43) Veröffentlichungstag der Anmeldung: 23.03.2011
(73) Patentinhaber: Spawnt Private S.à.r.l., 1148 Luxembourg (LU)
(72) Erfinder: BAUCH, Christian, 06766 Bitterfeld-Wolfen (DE); HOLL, Sven, 65558 Gückigen (DE); MOHSSENI-ALA, Seyed-Javad, 06766 Bitterfeld-Wolfen (DE); DELTSCHEW, Rumen, 04319 Leipzig (DE); LIPPOLD, Gerd, 04179 Leipzig (DE); AUNER, Norbert, 61479 Glashütten (DE)
(74) Vertreter: Epping - Hermann - Fischer
(86) Internationale Anmeldenummer: PCT/DE2009/000727
(87) Internationale Veröffentlichungsnummer: WO 2009/143824

(56) Entgegenhaltungen:
- GB-A- 702 349
- FRITZ G ET AL: "Gewinnung ringförmiger chlorierter Siliciummethylen-Verbindungen (Cyclocarbosilane) aus CH3SiCl3, (CH3)2SiCl2 und (CH3)3SiCl" ZEITSCHRIFT FUR ANORGANISCHE UND ALLGEMEINE CHEMIE, VERLAG JOHANN AMBROSIUS BARTH. LEIPZIG, DD, Bd. 302, 1. Januar 1959 (1959-01-01), Seiten 60-80, XP002487499 ISSN: 0044-2313
- U. HERZOG & R. WEST: "Heterosubstituted Polysilanes" MACROMOLECULES, Bd. 32, 1999, Seiten 2210-2214, XP002549486

## Beschreibung

Die vorliegende Erfindung betrifft ein halogeniertes Polysilan als reine Verbindung oder Gemisch von Verbindungen mit jeweils mindestens einer direkten Bindung Si-Si, deren Substituenten ausschließlich aus Halogen oder aus Halogen und Wasserstoff bestehen und in deren Zusammensetzung das Atomverhältnis Substituent:Silicium größer als 1:1 ist.

Derartige chlorierte Polysilane (PCS) sind bekannt, z.B. aus: DE 10 2005 024 041 A1; DE 10 2006 034 061 A1; WO 2008/031427 A2; WO 81/03168; US 2005/0142046 A1; M. Schmeisser, P. Voss "Über das Siliciumdichlorid [SiCl2]x", Z. anorg. allg. Chem. (1964) 334, 50-56; US2007/0078252A1; DE 31 26 240 C2; GB 702,349; R. Schwarz und H. Meckbach "Über ein Siliciumchlorid der Formel Si10Cl22", Z. anorg. allg. Chem. (1937) 232, 241-248. Sie lassen sich einerseits über eine rein thermische Reaktion, wie z.B. in M. Schmeisser, P. Voss "Über das Siliciumdichlorid [SiCl2]x", Z. anorg. allg. Chem. (1964) 334, 50-56 (Schmeisser 1964) beschrieben, durch Erhitzen von dampfförmigen Halogensilanen mit einem Reduktionsmittel *(Si, H₂)* auf relativ hohe Temperaturen (> 700 °C) herstellen. Die erhaltenen halogenierten Polysilane sind schwach grüngelb gefärbt, glasartig und hochpolymer. Weiterhin ist dass Literaturgemisch herstellungsbedingt stark mit AlCl₃ verunreinigt.

Ferner wird in R. Schwarz und H. Meckbach "Über ein Siliciumchlorid der Formel Si10Cl22", Z. anorg. allg. Chem. (1937) 232, 241-248 ein Siliciumchlorid mit der Zusammensetzung Si₁₀Cl₂₂ vorgestellt, welches durch Umsetzung von SiCl₄ mit Silit bei 1050°C erhalten wurde. Die Autoren beschreiben es als hochviskoses Öl mit einer Molmasse von 1060 g/Mol.

Ähnliche Ergebnisse beschreiben P. W. Schenk und Helmuth Bloching "Darstellung und Eigenschaften des Siliciumdichlorids (SiCl2)x", Z. anorg. allg. Chem. (1964) 334, 57-65, die Produkte mit Molmassen von 1250 (Si₁₂Cl₂₄) bis 1580 (Si₁₆Cl₃₂) g/Mol als farblose bis gelbe, zähe bis harzartige, cyclische Substanzen erhalten.

In R. Schwarz und U. Gregor "Über ein Siliciumchlorid der Formel SiCl", Z. anorg. allg. Chem. (1939) 241, 395-415 wird über ein PCS der Zusammensetzung SiCl berichtet. Dieses ist vollkommen unlöslich.

In der J. R. Koe, D. R. Powell, J. J. Buffy, S. Hayase, R. West, Angew. Chem. 1998, 110, 1514-1515 wird ein PCS (cremeweißer Feststoff) beschrieben, das durch Ringöffnungspolymerisation von Si₄Cl₈ entsteht und in allen gängigen Lösungsmitteln unlöslich ist.

In Harald Schäfer und Julius Nickl "Über das Reaktionsgleichgewicht Si+SiCl4=2SiCl2 und die thermochemischen Eigenschaften des gasförmigen Silicium(II)-chlorids", Z. anorg. allg. Chem. (1953) 274, 250-264 und in R. Teichmann und E. Wolf "Experimentelle Untersuchung des Reaktionsgleichgewichtes SiCl4(g)+Si(f)=2SiCl2(g) nach der Strömungsmethode", Z. anorg. allg. Chem. (1966) 347, 145-155 werden thermodynamische Untersuchungen zur Reaktion von SiCl₄ mit Si durchgeführt. PCS werden hierbei nicht isoliert oder beschrieben.

In GB 702,349 wird die Umsetzung von Chlorgas mit Calciumsilicid im Wirbelbett bei max. 250°C zu niederen Perchloroligosilanen beschrieben. Die hierbei entstehenden Gemische sind aufgrund der geringen Temperatur unverzweigt, enthalten keine cyclischen PCS und bestehen aus ca. 80% Si₂Cl₆ und Si₃Cl₈ neben 11% Si₄Cl₁₀ und geringen Mengen Si₅Cl₁₂ und Si₆Cl₁₄. Die Mischungen dieser Verbindungen sind farblose Flüssigkeiten, enthalten keine Cyclen und sind prozessbedingt durch CaCl₂ verunreinigt.

DE 31 26 240 C2 beschreibt die nasschemische Herstellung von PCS aus Si₂Cl₆ durch Reaktion mit einem Katalysator. Die erhaltenen Mischungen enthalten noch den Katalysator und werden deshalb mit organischen Lösemitteln gewaschen, wodurch Spuren der Reaktanden, der Lösungsmittel und des Katalysators zurückbleiben. Außerdem enthalten diese PCS keine cyclischen Verbindungen.

Weitere nasschemische Verfahren werden in US2007/0078252A1 vorgestellt:
1. Halogenierte Aryloligosilane mit Natrium zu reduzieren und nachfolgend mit HCl/AlCl₃ Aromaten abzuspalten.
2. Übergangsmetallkatalysierte dehydrierende Polymerisation von arylierten H-Silanen und nachfolgende Entarylierung mit HCl/AlCl₃.
3. Anionisch katalysierte Ringöffnungspolymerisation (ROP) von (SiCl₂)₅ mit TBAF (Bu₄NF).
4. ROP von (SiAr₂)₅ mit TBAF oder Ph₃SiK und nachfolgende Entarylierung mit HCl/AlCl₃.

Bei all diesen Methoden werden wiederum mit Lösungsmittel/Katalysator verunreinigte PCS erhalten, von denen nur die destillierbaren Anteile effektiv gereinigt werden können. Daher kann aus den obigen Reaktionen kein Produktgemisch mit hoher Reinheit erhalten werden.

Ferner ist bekannt, derartige halogenierte Polysilane über ein plasmachemisches Verfahren herzustellen. Beispielsweise betrifft die DE 10 2005 024 041 A1 ein Verfahren zur Herstellung von Silicium aus Halogensilanen, bei dem in einem ersten Schritt das Halogensilan unter Erzeugung einer Plasmaentladung zu einem halogenierten Polysilan umgesetzt wird, das nachfolgend in einem zweiten Schritt unter Erhitzen zu Silicium zersetzt wird. Bei diesem bekannten Verfahren wird in Bezug auf die Plasmaerzeugung mit hohen Energiedichten gearbeitet (> 10 Wcm⁻³), wobei das Endprodukt ein wenig kompakter wachsartig-weißer bis gelbbrauner oder brauner Feststoff ist. Spektroskopische Untersuchungen haben gezeigt, dass das erhaltene Endprodukt einen relativ großen Vernetzungsgrad aufweist. Die hohen verwendeten Energiedichten führen zu Produkten hoher Molmassen, woraus Unlöslichkeit und geringe Schmelzbarkeit resultieren. Außerdem hat auch dieses PCS einen signifikanten Wasserstoff-Gehalt.

Weiterhin wird in WO 81/03168 ein Hochdruckplasmaverfahren zur Synthese von HSiCl₃ beschrieben, bei welchem PCS als geringfügige Nebenprodukte anfallen. Da diese PCS unter hydrierenden Bedingungen (HSiCl₃-Synthese!) erhalten werden, weisen sie einen signifikanten Wasserstoff-Gehalt auf.

In US 2005/0142046 A1 wird eine PCS-Herstellung durch stille elektrische Entladung in SiCl₄ bei Normaldruck beschrieben. Bei diesem Verfahren entstehen nur kurzkettige Oligosilane, wie der Autor am Beispiel der selektiven Umsetzung von SiH₄ zu Si₂H₆ und Si₃H₈ durch Hintereinanderschaltung mehrerer Reaktoren zeigt.

Analog verhält es sich in DE 10 2006 034 061 A1, wo eine ähnliche Reaktion beschrieben wird, bei der gasförmige und flüssige PCS mit Si₂Cl₆ als Hauptbestandteil (S.3,[0016]) erhalten werden. Zwar beschreiben die Autoren, dass die Molmassen der PCS durch Verwendung mehrerer hintereinandergeschalteter Reaktoren erhöht werden können, jedoch kann hierbei nur Material erhalten werden, das sich unzersetzt in die Gasphase bringen lässt. Diesen Sachverhalt bringen die Autoren auch in den Ansprüchen zum Ausdruck, in denen sie Destillationen für alle erhaltenen PCS-Gemische vorsehen. Weiterhin sind die in DE 10 2006 034 061 A1 genannten PCS Wasserstoff-haltig.

Neben chlorierten Polysilanen sind auch weitere halogenierte Polysilane SiₓX_{y} (X = F, Br, I) im Stand der Technik bekannt.

Nach F. Höfler, R. Jannach, Monatshefte für Chemie 107 (1976) 731-735 lässt sich Si₃F₉ aus Si₃(OMe)₈ mit BF₃ im geschlossenen Rohr bei -50 bis -60°C (8 h) in Ausbeuten von 55-60% herstellen. Das Methoxy-isotetrasilan wird unter diesen Bedingungen vollständig zu kürzeren Perfluorsilanen abgebaut.

E. Hengge, G. Olbrich, Monatshefte für Chemie 101 (1970) 1068-1073 beschreibt die Herstellung eines flächig aufgebauten Polymers (SiF)ₓ. Aus CaSi₂ werden durch Reaktion mit ICl bzw. IBr die flächig aufgebauten Polymere (SiCl)ₓ bzw. (SiBr)ₓ erhalten. Mit SbF₃ wird dann ein Halogenaustausch vollzogen. Dabei tritt jedoch teilweiser Abbau der Si-Schichtstruktur ein. Das entstehende Produkt enthält die stöchiometrisch aus CaSi₂ vorgegebene Menge CaCl₂, die nicht ausgewaschen werden kann.

Die Herstellung von Polyfluorsilan (SiF₂)ₓ wird beispielsweise in M. Schmeisser, Angewandte Chemie 66 (1954) 713-714 beschrieben. SiBr₂F₂ reagiert bei Raumtemperatur in Ether mit Magnesium zu einem gelben, hochpolymeren (SiF₂)ₓ. Verbindungen wie Si₁₀Cl₂₂, (SiBr)ₓ und Si₁₀Br₁₆ lassen sich mit ZnF₂ zu den entsprechenden Fluoriden umhalogenieren.

R.L. Jenkins, A.J. Vanderwielen, S.P. Ruis, S.R. Gird, M.A. Ring, Inorganic Chemistry 12 (1973) 2968-2972 berichten, dass sich Si₂F₆ bei 405°C zu SiF₄ und SiF₂ zersetzt. Durch Kondensation dieses Zwischenproduktes lässt sich (SiF₂)ₓ gewinnen.

Die Standardmethode zur Erzeugung von (SiF₂)ₓ wird beispielsweise in P.L. Timms, R.A. Kent, T.C. Ehlert, J.L. Margrave, Journal of the american chemical society 87 (1965) 2824-2828 erläutert. Dabei wird (SiF₂)ₓ durch Überleiten von SiF₄ über Silicium bei 1150°C und 0,1-0,2 Torr und Ausfrieren des entstehenden SiF₂ bei -196°C mit Polymerisation beim anschließenden Auftauen erzeugt. Das farblose bis leicht gelbe plastische Polymer schmilzt beim Erwärmen auf 200 - 350°C im Vakuum und setzt perfluorierte Silane von SiF₄ bis mindestens Si₁₄F₃₀ frei. Es verbleibt ein siliciumreiches Polymer (SiF)ₓ, das sich bei 400 ± 10°C heftig zu SiF₄ und Si zersetzt. Die niederen Perfluorpolysilane sind farblose Flüssigkeiten oder kristalline Feststoffe, die durch fraktionierte Kondensation in Reinheiten > 95% isolierbar sind. Spuren sekundärer oder tertiärer Amine katalysieren die Polymerisation der Perfluoroligosilane. US 2,840,588 legt offen, dass SiF₂ bei < 50 Torr und > 1100°C aus SiF₄ und Si, SiC, Siliciumlegierungen oder Metallsiliciden entsteht. Zur Isolierung von (SiF₂)ₓ muss das Zwischenprodukt schnell auf < 0°C gekühlt werden. G.P. Adams, K.G. Sharp, P.W. Wilson, J.L. Margrave, Journal of chemical thermodynamics 2 (1970) 439-443 beschreiben, dass (SiF₂)ₓ aus SiF₄ und Si bei 1250°C hergestellt wird. In ähnlicher Weise wird nach US 4070444 A (SiF₂)ₓ durch Reaktion eines Perfluorsilans mit metallurgischem Silicium und anschließender Abscheidung des SiF₂ hergestellt. Thermolyse des Polymers setzt elementares Silicium höherer Reinheit als des Ausgangsmaterials frei. Ebenfalls der Aufreinigung dient das in US 4138509 A offengelegte Verfahren. Silicium, das Aluminium als Verunreinigung enthält, wird in Anwesenheit von SiO₂ mit SiF₄ bei Temperaturen > 1100°C umgesetzt, um SiF₂ zu erzeugen. Eine Kondensation des Produktgases in zwei Stufen führt zur selektiven Abscheidung der gasförmigen Verunreinigungen in einer ersten Fraktion, während die zweite Fraktion aus weitgehend reinem (SiF₂)ₓ besteht. Thermische Zersetzung des Polymers bei 100 - 300°C erzeugt gasförmige und flüssige perfluorierte Silane, die dann bei 400 - 950°C zu Silicium zersetzt werden.

FI 82232 B offenbart eine Reaktion bei noch höherer Temperatur. SiF₄ reagiert mit Si in einer Ar-Plasmaflamme zu SiF₂ (0,8 : 1 mol, 70% SiF₂-Gehalt).

Kurzkettige perbromierte Polysilane entstehen nach A. Besson, L. Fournier, Comptes rendus 151 (1911) 1055-1057. Eine elektrische Entladung in gasförmigem HSiBr₃ erzeugt SiBr₄, Si₂Br₆, Si₃Br₈ und Si₄Br₁₀.

K. Hassler, E. Hengge, D. Kovar, Journal of molecular structure 66 (1980) 25-30 stellen cyclo-Si₄Br₈ durch Reaktion von (SiPh₂)₄ mit HBr unter AlBr₃-Katalyse her.
In H. Stüger, P. Lassacher, E. Hengge, Zeitschrift für allgemeine und anorganische Chemie 621 (1995) 1517-1522 wird Si₅Br₉H durch Kochen mit Hg(tBu₂) in Heptan zum entsprechenden Bis-cyclopentasilan Si₁₀Br₁₈ umgesetzt. Alternativ kann eine Ringverknüpfung von Si₅Ph₉Br mit Naphtyllithium oder K bzw. Na/K in verschiedenen Lösungsmitteln mit anschließender Halogenierung mit HBr/AlBr₃ erfolgen.

Perbromierte Polysilane werden beispielsweise in M. Schmeisser, M. Schwarzmann, Zeitschrift für Naturforschung 11b (1956) 278-282 beschrieben. Bei der Reaktion von Mg-Spänen mit SiBr₄ in siedendem Ether entstehen zwei Phasen, deren untere aus Magnesiumbromid-Etherat und (SiBr)ₓ besteht, während die obere in Ether gelöstes MgBr₂ und geringe Mengen niedere Siliciumsubbromide enthält. (SiBr)ₓ kann durch Waschen mit Ether gereinigt werden. Die Reaktion von SiBr₄-Dampf mit Si bei 1200°C und im Vakuum erzeugt braunes, sprödes (SiBr₂)ₓ. Die hydrolyseempfindliche Substanz ist in Benzol und den meisten unpolaren Lösungsmitteln gut löslich. Im Vakuum zersetzt sich das Polymer ab 200°C unter Abspaltung von Si₂Br₆. Bei 350°C verbleibt (SiBr)ₓ, weiteres Erwärmen auf 550-600°C führt zu elementarem Silicium. Es wird auf Grund der guten Löslichkeit vermutet, dass (SiBr₂)ₓ aus Si-Ringen mit begrenzter Größe besteht. Die Molekulargewichtsbestimmung von ca. 3000 erscheint unzuverlässig. (SiBr₂)ₓ reagiert mit Mg in Ether zu (SiBr_{1,46})ₓ.
DE 955414 B offenbart ebenfalls eine Reaktion bei hoher Temperatur. Wird SiBr₄- oder Br₂-Dampf im Vakuum bei 1000-1200°C durch Siliciumgrieß geleitet, so entsteht neben etwas Si₂Br₆ hauptsächlich (SiBr₂)ₓ.

Nach M. Schmeisser, Angewandte Chemie 66 (1954) 713-714 entsteht durch Einwirken von SiBr₄ auf elementares Si bei 1150°C neben (SiBr)ₓ auch Si₂Br₆ und weitere Oligosilane wie Si₁₀Br₁₆.

In US 2007/0078252 A1 wird die Ringöffnungspolymerisation von cyclo-Si₅Br₁₀ und cyclo-Si₅I₁₀ durch Einwirkung von Bu₄NF in THF oder DME beansprucht.

Beispielsweise E. Hengge, D. Kovar, Angewandte Chemie 93 (1981) 698-701 oder K. Hassler, U. Katzenbeisser, Journal of organometallic chemistry 480 (1994) 173-175 berichten über die Erzeugung kurzkettiger periodierter Polysilane. Durch Umsetzung der Phenylcyclosilane (SiPh₂)ₙ (n = 4 - 6) oder von Si₃Ph₈ mit HI unter AlI₃-Katalyse entstehen die periodierten Cyclosilane (SiI₂)ₙ (n = 4 - 6) oder Si₃I₈.

M. Schmeißer, K. Friederich, Angewandte Chemie 76 (1964) 782 beschreiben verschiedene Wege zur Herstellung von periodierten Polysilanen. (SiI₂)ₓ entsteht in ca. 1% Ausbeute beim Überleiten von SiI₄-Dampf über elementares Silicium bei 800-900°C im Hochvakuum. Die Pyrolyse von SiI₄ unter den gleichen Bedingungen liefert das gleiche sehr hydrolyseempfindliche und in Benzol lösliche Produkt. Bei der Einwirkung einer Glimmentladung auf SiI₄-Dämpfe im Hochvakuum wird mit einer Ausbeute von 60 bis 70 % (bezogen auf SiI₄) ein festes, amorphes, gelbrötliches, in allen üblichen Lösungsmitteln unlösliches Siliciumsubiodid der Zusammensetzung (SiI_{2,2})ₓ erhalten. Die Pyrolyse dieser Substanz bei 220 bis 230°C im Hochvakuum führt zu einem dunkelroten (SiI₂)ₓ, wobei gleichzeitig SiI₄ und Si₂I₆ entstehen. Die chemischen Eigenschaften der so gewonnenen Verbindungen (SiI₂)ₓ stimmen - bis auf die Löslichkeit in Benzol - überein. Die Pyrolyse von (SiI₂)ₓ bei 350°C im Hochvakuum ergibt SiI₄, Si₂I₆ und einen orangeroten, spröden Festkörper der Zusammensetzung (SiI₂)ₓ. (SiI₂)ₓ reagiert mit Chlor oder Brom zwischen -30°C und +25°C zu benzollöslichen, gemischten Siliciumsubhalogeniden wie (SiClI)ₓ und (SiBrI)ₓ. Bei höheren Temperaturen werden die Si-Si-Ketten durch Chlor oder Brom bei gleichzeitiger völliger Substitution des Iods gespalten. Man erhält Verbindungen vom Typ SiₙX₂ₙ₊₂ (n = 2-6 für X = Cl, n = 2-5 für X = Br). (SiJ₂)ₓ reagiert mit Jod bei 90 bis 120°C im Bombenrohr vollständig zu SiI₄ und Si₂I₆.

Der vorliegenden Erfindung liegt die Aufgabe zugrunde, ein halogeniertes Polysilan der angegebenen Art zu schaffen, das besonders gut löslich und schmelzbar ist. Weiterhin soll ein Verfahren zur Herstellung eines derartigen halogenierten Polysilans zur Verfügung gestellt werden.

Diese Aufgabe wird erfindungsgemäß bei einem halogenierten Polysilan der angegebenen Art dadurch gelöst, dass das Polysilan aus Ringen und Ketten mit einem hohen Anteil Verzweigungsstellen besteht, der bezogen auf das gesamte Produktgemisch größer 1 % beträgt, ein RAMAN-Molekülschwingungsspektrum von I₁₀₀/I₁₃₂ < 1 aufweist, wobei I₁₀₀ die Raman-Intensität bei 100 cm⁻¹ und I₁₃₂ die Raman-Intensität bei 132 cm⁻¹ bedeuten, und in ²⁹Si-NMR-Spektren seine signifikanten Produktsignale im chemischen Verschiebungsbereich von +23 ppm bis -13 ppm, von -18 ppm bis -33 ppm und von -73 ppm bis -93 ppm besitzt.

Die ²⁹Si-NMR-Spektren wurden an einem 250 MHz-Gerät vom Typ Bruker DPX 250 mit der Pulssequenz zg30 aufgenommen und gegen Tetramethylsilan (TMS) als externen Standard [δ(²⁹Si)=0.0] referenziert. Die Aquisitionsparameter sind hierbei: TD=32k, AQ=1,652 s, D1=10 s, NS=2400, O1P=-40, SW=400.

Die RAMAN-Molekülschwingungsspektren wurden mit einem Spektrometer XY 800 der Firma Dilor mit abstimmbarer Laseranregung (T-Saphirlaser, durch Ar-Ionen-Laser gepumpt) sowie konfokalem Raman- und Lumineszenzmikroskop, mit flüssigem Stickstoff gekühltem CCD-Detektor, Messtemperatur gleich Raumtemperatur, Anregungswellenlängen im sichtbaren Spektralbereich, u. a. 514,53 nm und 750 nm, ermittelt.

Das erfindungsgemäß ausgebildete halogenierte Polysilan wird mit deutlich "weicheren" Bedingungen, als z.B. in [Schmeisser 1994] beschrieben, hergestellt. Dies bedeutet, dass bei niedrigerer Temperatur und erhöhtem Druck gearbeitet wird, wodurch in der Gasphase ein überschuss von SiX₄ (X = Halogen) vorhanden ist, mit welchem das gebildete SiX₂ unter Insertion in die Si-X-Bindungen reagieren kann. Hierdurch wird der Polymerisationsgrad des SiX₂ reduziert, wodurch ein flüssiges und besser lösliches Produkt entsteht. Außerdem wird die Umsatzrate erhöht, wodurch ein technisches Darstellungsverfahren erhalten wird.

Das Polysilan besitzt eine schwache Färbung von schmutziggelb bis gelblich-hellbraun und ist nicht glasartig und hochpolymer, sondern ölig bis zähflüssig, was zeigt, dass der Polymerisationsgrad deutlich geringer ist. Das Polysilan stellt ein komplexes Substanzgemisch dar mit mittleren Molmassen bis ca. 900 g/Mol.

Der Verzweigungsgrad wurde per ²⁹Si-NMR-Spektroskopie ermittelt. Dabei wurde festgestellt, dass die mit dem erfindungsgemäßen Verfahren hergestellten halogenierten Polysilane einen hohen Gehalt an verzweigten kurzkettigen und cyclischen Verbindungen aufweisen, wobei deren Verzweigungsstellen einen Anteil am Gesamtgemisch von mehr als 1 % besitzen. Die Verzweigungen im ²⁹Si-NMR zeigen sich dabei in einem Bereich von δ = -18 bis -33 ppm und δ = -73 bis -93 ppm. In Standard-²⁹Si-NMR-Spektren der erfindungsgemäßen. Polysilane zeigen sich in diesen Bereichen deutliche Resonanzen.

Der hohe Gehalt an verzweigten Polysilanen hängt damit zusammen, dass letztere thermodynamisch günstiger als halogenierte Polysilane mit unverzweigten Ketten sind und daher bei der thermischen Reaktion, die nahe am thermodynamischen Gleichgewicht abläuft, bevorzugt entstehen. Auch der Gehalt an Cyclosilanen wurde per ²⁹Si-NMR- und zusätzlich durch RAMAN-Spektroskopie ermittelt (s.u.), wobei sich zeigte, dass ein relativ hoher Gehalt an cyclischen Molekülen vorliegt.

Ferner weisen die erfindungsgemäß ausgebildeten halogenierten Polysilane ein RAMAN-Molekülschwingungsspektrum von I₁₀₀/I₁₃₂ < 1 auf. Insbesondere treten im niederfrequenten Bereich schwache Raman-Signale im Bereich von 95-110 cm⁻¹ auf, während im Bereich 120-135 cm⁻¹ wesentlich stärkere Raman-Intensitäten gemessen wurden.

Zur Erklärung hierfür sei auf folgendes hingewiesen. Theoretische, quantenmechanische Berechnungen zeigen für zyklische halogenierte Polysilane u. a. intensive charakteristische Schwingungsmoden zwischen 120 cm⁻¹ und 135 cm⁻¹. Derartige Berechnungen für lineare halogenierte Polysilane dagegen zeigen in diesem Bereich keine ausgeprägten Moden. Die niederfrequentesten, intensiven Moden der linearen Verbindungen dagegen verschieben sich mit zunehmender Kettenlänge nach kleineren Wellenzahlen. Beim Gemisch aus halogenierten Polysilanen treten sie als RAMAN-Bande zwischen 95 und 110 cm⁻¹ in Erscheinung. Insofern lässt sich aus dem I₁₀₀/I₁₃₂-Kriterium eine Aussage über den Gehalt an zyklischen bzw. linearen Molekülen treffen.

Das erfindungsgemäße halogenierte Polysilan zeichnet sich ferner dadurch aus, dass es in vielen inerten Lösungsmitteln völlig löslich ist, so dass es leicht aus einem für die Herstellung verwendeten Reaktor entfernt werden kann.

Das erfindungsgemäß ausgebildete halogenierte Polysilan lässt sich insbesondere in inerten Lösungsmitteln, wie SiCl₄, Benzol, Toluol, Paraffin etc., gut lösen, und zwar sowohl bei Raumtemperatur als auch in kalten und warmen oder siedenden Lösungsmitteln. Dies steht im Gegensatz zu dem gemäß der vorstehend genannten Veröffentlichung (DE 10 2005 024 041 A1) hergestellten halogenierten Polysilan, das in derartigen Lösungsmitteln überhaupt nicht löslich ist bzw. nur zu einem kleinen Teil gelöst werden kann.

Das halogenierte Polysilan ist vorzugsweise dadurch gekennzeichnet, dass dessen Substituenten ausschließlich aus Halogen bestehen.

Das erfindungsgemäß ausgebildete halogenierte Polysilan weist einen hohen Gehalt verzweigter Ketten und Ringe auf. Es ist durchweg ölig bis zähflüssig.

Das erfindungsgemäße halogenierte Polysilan ist bei Verwendung entsprechend reiner Edukte intrinsisch sauber und besteht nur aus Si und X (X = Halogen) .

Ferner sind die erfindungsgemäßen halogenierten Polysilane zu einem erheblichen Teil auch unter Vakuum nicht flüchtig und zersetzen sich, wenn man versucht, sie zu destillieren.

Das erfindungsgemäß ausgebildete halogenierte Polysilan unterscheidet sich gegenüber dem plasmachemisch hergestellten Polysilan des genannten Standes der Technik (DE 10 2005 024 041 A1) ferner dadurch, dass das hergestellte Polysilanrohgemisch eine geringere mittlere Kettenlänge von n = 3-9 aufweist.

Schließlich weist das plasmachemisch hergestellte halogenierte Polysilan des Standes der Technik eine höhere Schmelztemperatur als das erfindungsgemäße halogenierte Polysilan auf.

Ein weiteres Unterscheidungskriterium gegenüber dem Stand der Technik (DE 10 2005 024 041 A1; DE 10 2006 034 061 A1; WO 2008/031427 A2; WO 81/03168) besteht darin, dass das erfindungsgemäß halogenierte Polysilan keine Wasserstoffsubstituenten enthält.

Ferner ist das erfindungsgemäße Polysilan aufgrund seiner Herstellung in einem Hochtemperatur-Symproportionierungsprozess hochrein in Bezug auf Katalysator- und Lösemittelkontaminationen, was ein weiteres Unterscheidungsmerkmal zu den nasschemischen Verfahren zur Herstellung von Polysilanen ist, da bei letzteren Verfahren immer Spuren von Lösungsmitteln und metallsalzartigen Reagenzien im Produkt verbleiben.

Die Erfindung betrifft insbesondere ein chloriertes Polysilan.

Die vorstehend genannte Aufgabe wird ferner durch ein Verfahren zum Herstellen von halogeniertem Polysilan der vorstehend beschriebenen Art durch Umsetzen von Halogensilan mit Silicium bei hohen Temperaturen gelöst, das dadurch gekennzeichnet ist, dass mit einem Überschuss Halogensilan in Bezug auf das im Reaktor gebildete Dihalogensilylen (SiX₂) gearbeitet wird. Dies kann beispielsweise durch Abstimmen der Verweildauer des Halogensilans in einer verwendeten Siliciumschüttung auf die Korngröße des verwendeten Siliciums erfolgen.

Ferner wird vorzugsweise der Arbeitsdruck gegenüber dem Stand der Technik (kleiner als 10⁻³ hPa, Schmeisser 1964) signifikant erhöht (0,1-1000 hPa), um die Wahrscheinlichkeit von wirksamen Stößen des gebildeten SiX₂ mit SiX₄ in der Gasphase zu erhöhen, wodurch eine Polymerisation des gebildeten SiX₂ durch Wandreaktionen unterdrückt wird. Durch diese Maßnahme wird einerseits die Bildung eines in der Literatur (Schmeisser 1964) beschriebenen hochpolyme-ren, glasartigen, schwach grüngelben Feststoffs unterdrückt und andererseits die Umsatzrate zu den erfindungsgemäßen Polysilanen gegenüber dem Stand der Technik signifikant (größer als 4fach) erhöht. Ein weiteres Unterscheidungsmerkmal ist die geringere mittlere Molmasse der Polysilane von 300-900 g/Mol gegenüber 1600-1700 g/Mol bei Schmeisser 1964.

Was die Temperatur des Reaktors anbetrifft, in dem das erfindungsgemäße Verfahren durchgeführt wird, so werden die Reaktorteile, an denen das halogenierte Polysilan abgeschieden wird, vorzugsweise auf einer Temperatur von -70 °C bis 300 °C, insbesondere -20 °C bis 280 °C, gehalten. Generell wird die Temperatur der Abscheidungszone relativ niedrig gehalten, um die Bildung von Si zu vermeiden.

Mit dem erfindungsgemäßen Verfahren lassen sich Molekülgemische mit mittleren Molmassen von 300-900 g/Mol herstellen.

Ein besonders bevorzugtes erfindungsgemäßes halogeniertes Polysilan sind die Perchlorpolysilane (PCS).

Für das erfindungsgemäße Verfahren können zur Durchführung der Reaktion alle Energiequellen verwendet werden, die den Reaktor auf die nötigen Reaktionstemperaturen bringen können, beispielsweise elektrische Widerstandsheizung, Gasbrenner oder Sonnenöfen (Hohlspiegel). Bevorzugt werden elektrische Widerstandsheizungen verwendet, da mit diesen eine sehr genaue Temperaturkontrolle möglich ist.

Für das erfindungsgemäße Verfahren findet als Ausgangsstoff ein Halogensilan Verwendung. Als Halogensilan im Sinne des erfindungsgemäßen Verfahrens werden Verbindungen des Typs SiX₄ (X ≈ F, Cl, Br, J) sowie deren Gemische bezeichnet, wobei auch Halogensilane mit gemischter Halogensubstitution eingesetzt werden können.

Die bei dem erfindungsgemäßen Verfahren verwendete Gasmischung (Halogensilan(e)) kann zusätzlich durch ein Inertgas verdünnt sein und/oder Zumischungen enthalten, welche die Produktbildung begünstigen. Die Zumischung von Inertgasen ist jedoch beim erfindungsgemäßen Verfahren nicht zwingend.

Bei den erfindungsgemäßen Verfahren werden als Halogensilan bevorzugt Fluorsilane oder Chlorsilane eingesetzt. Eine besonders bevorzugte Ausgangsverbindung ist SiCl₄.

Das erfindungsgemäße halogenierte Polysilan kann auch Halogensubstituenten mehrerer verschiedener Halogene enthalten.

Bei dem erfindungsgemäßen Verfahren können auch Halogensilane mit gemischter Halogensubstitution eingesetzt werden.

### Ausführungsbeispiel 1

210 g SiCl₄ werden dampfförmig in ein evakuiertes Quarzglasrohr, welches mit einem Gefälle von ca. 30° durch einen Ofen geführt wird, geleitet und der SiCl₄-Dampf durch eine 20 cm lange, auf 1200°C geheizte Siliciumschüttung geleitet, wobei der Prozessdruck auf ca. 1 hPa gehalten wird. Das Produktgemisch wird nach Verlassen der geheizten Zone an den auf 20°C gekühlten Quarzglaswänden kondensiert und fließt größtenteils in einen auf -196 °C gekühlten Vorlagekolben ab. Nach 6 h wird das zähe rotbraune Produkt durch Lösen in wenig SiCl₄ aus dem Reaktor entfernt und filtriert. Nach Entfernen des SiCl₄ unter Vakuum bleiben ca. 80 g chloriertes Polysilan in Form einer rotbraunen viskosen Flüssigkeit zurück.

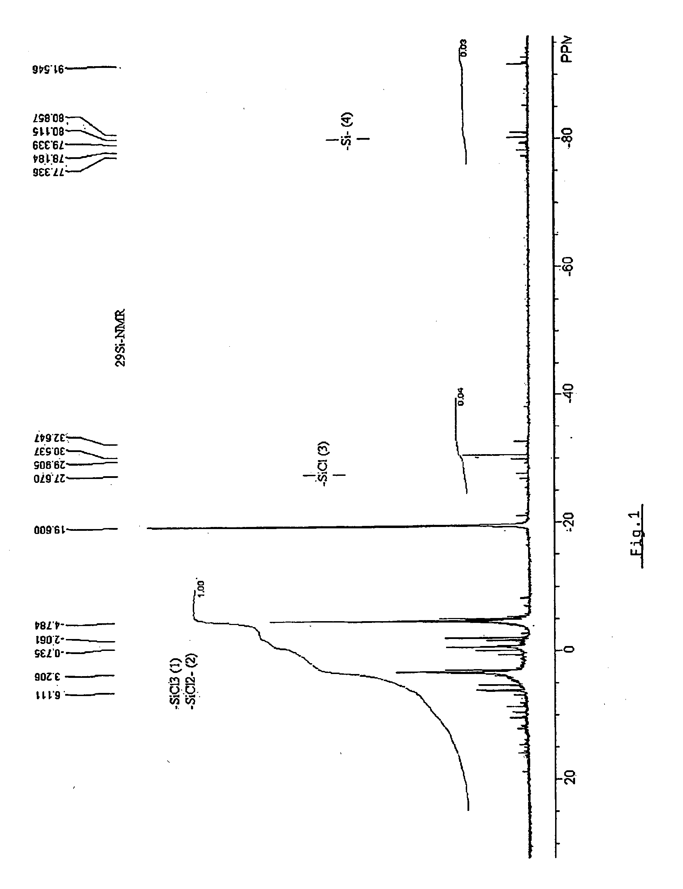

Die typischen ²⁹Si-NMR-Verschiebungen und der hohe Gehalt verschiedener, kurzkettiger verzweigter Verbindungen, z.B. Dekachlorisotetrasilan (u.a. δ=-32 ppm), Dodekachlorneopentasilan (u.a. δ=-80 ppm) (diese Signale kommen im Verschiebungsbereich bei (3), der typisch ist für Signale von Si-C1-Gruppen (tertiäre Si-Atome), und (4), der typisch ist für Signale von Si-Gruppen mit ausschließlich Si-Substituenten (quartäre Si-Atome)), sind anhand von folgendem Spektrum (Fig. 1) ersichtlich. Durch Integration der ²⁹Si-NMR-Spektren zeigt sich, dass der Gehalt an Siliciumatomen, die genannte Verzweigungsstellen (tertiäre und quartäre Si-Atome) des kurzkettigen Anteiles bilden, bezogen auf das gesamte Produktgemisch 1,8 Massen-% beträgt und damit > 1 Massen-% ist. Die chemischen Verschiebungen im ²⁹Si-NMR-Spektrum bei +23 ppm bis -13 ppm ((1) und (2)) zeigen Signale von SiCl₃- (Endgruppen) und SiCl₂-Gruppen (unverzweigte Ketten- oder Cyclenabschnitte), die Signale im Bereich von -18 ppm bis -33 ppm ((3)) zeigen Signale von SiCl-Gruppen und vom Lösungsmittel SiCl₄ (ca. -19,6 ppm), wie sie z.B. im Dekachlorisotetrasilan auftreten, und die Signale im Bereich von -73 ppm bis -93 ppm sind auf quartäre Si-Atome der chlorierten Polysilane zurückzuführen, wie sie z.B. in Dodekachlorneopentasilan auftreten. Die mittlere Molmasse wird per Kryoskopie zu ca. 973 g/Mol ermittelt, was für das erhaltene chlorierte Polysilan (SiCl₂)ₙ bzw. SiₙCl₂ₙ₊₂ einer mittleren Kettenlänge von ca. n=10 für (SiCl₂)ₙ bzw. ca. n=9 für SiₙCl₂ₙ₊₂ entspricht. Das Verhältnis von Si zu Cl im Produktgemisch wird nach Aufschluss durch Chlorid-Titration nach MOHR zu Si:Cl=1:2,1 (entspricht der empirischen (analytischen) Formel SiCl_{2,1}) ermittelt. Das Signal bei ca. -19,6 ppm stammt vom Lösungsmittel Tetrachlorsilan. Niedermolekulare Cyclosilane konnten in den Gemischen per RAMAN-Spektroskopie durch intensive Banden im Bereich von 132 cm⁻¹ nachgewiesen werden. Hinweise für das Vorliegen von Cyclosilanen finden sich auch in den ²⁹Si-NMR-Spektren durch die Signale bei δ= -1,6 ppm (Si₅Cl₁₀) und δ= -2,7 ppm (Si₆Cl₁₂).

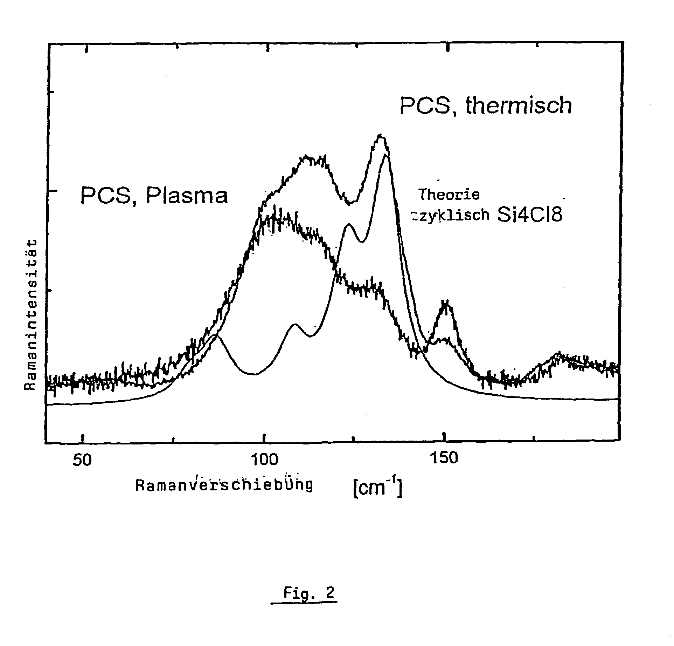

Ein typisches RAMAN-Molekülschwingungsspektrum des chlorierten Polysilans ist im Folgenden (Fig.2) dargestellt. Das Spektrum weist ein Verhältnis I₁₀₀/I₁₃₂ < 1 auf, d.h., dass die Raman-Intensität bei 132 cm⁻¹ (I₁₃₂) deutlich höher ist als diejenige bei 100cm⁻¹ (I₁₀₀). Zum Vergleich sind das Spektrum eines plasmachemisch erzeugten Polysilangemisches und das berechnete Spektrum von cyclischem Tetrasilan (Octachlorcyclotetrasilan, Si₄Cl₈) angegeben, wobei sich im Falle des plasmachemisch erzeugten Polysilangemisches das Verhältnis umkehrt zu I₁₀₀/I₁₃₂ > 1.

Diese Grafik zeigt auch beispielhaft den Ausschnitt einer theoretischen Kurve (rot). Dabei sind die quantenchemisch gerechneten Moden [Hohenberg P, Kohn W. 1964. Phys. Rev. B 136:864-71; Kohn W, Sham LJ. 1965. Phys. Rev. A 140:1133-38, W. Koch and M. C. Holthausen, A Chemist's Guide to Density Functional Theory, Wiley, Weinheim, 2nd edn., 2000] mit einer Multi-Lorentz-Peak-Funktion angepasst, die etwa die experimentelle spektrale Auflösung simuliert. Hinsichtlich der absoluten Intensität wurde die Theoriekurve so normiert, dass sie zur Anschauung gut in die Grafik passt. Die Relativintensitäten der Peaks in der Theorie stammen unmittelbar aus der first principle- Rechnung. Damit soll gezeigt werden, dass bestimmte Intensitäten typisch für zyklische Oligosilane sind.

### Ausführungsbeispiel 2

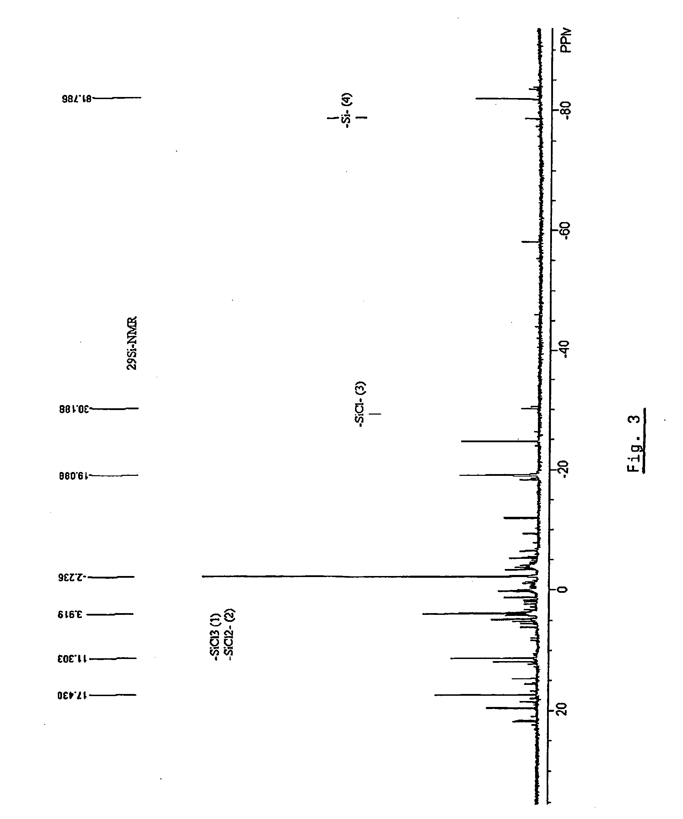

158 g SiCl₄ werden dampfförmig in ein evakuiertes Quarzglasrohr, welches mit einem Gefälle von ca. 30° durch einen Ofen geführt wird, geleitet und der SiCl₄-Dampf durch eine 10 cm lange, auf 1200°C geheizte Siliciumschüttung geleitet, wobei der Prozessdruck auf ca. 5 hPa gehalten wird. Das Produktgemisch wird nach Verlassen der geheizten Zone an den gekühlten Quarzglaswänden kondensiert und fließt teilweise in einen gekühlten Vorlagekolben ab. Nach 3 Stunden wird das zähe gelbbräunliche Produkt durch Lösen in wenig SiCl₄ aus dem Reaktor entfernt und filtriert. Nach Entfernen des SiCl₄ im Vakuum bleiben 27 g chloriertes Polysilan in Form einer schwachgelben viskosen Flüssigkeit zurück. Die typischen ²⁹Si-NMR-Verschiebungen und der hohe Gehalt verschiedener, kurzkettiger verzweigter Verbindungen, z.B. Dekachlorisotetrasilan (u.a. δ=-32 ppm), Dodekachlorneopentasilan (u.a. δ=-80 ppm) (diese Signale kommen im Verschiebungsbereich bei (3), der typisch ist für Signale von Si-Cl-Gruppen (tertiäre Si-Atome), und (4), der typisch ist für Signale von Si-Gruppen mit ausschließlich Si-Substituenten (quartäre Si-Atome), sind anhand von folgendem Spektrum (Fig.3) ersichtlich. Durch Integration der ²⁹Si-NMR-Spektren zeigt sich, dass der Gehalt an Siliciumatomen, die genannte Verzweigungsstellen (tertiäre und quartäre Si-Atome) des kurzkettigen Anteiles bilden, bezogen auf das gesamte Produktgemisch 2,1 Massen-% beträgt und damit größer 1 Massen-% ist. Die chemischen Verschiebungen im ²⁹Si-NMR-Spektrum bei +23 ppm bis -13 ppm ((1) und (2)) zeigen Signale von SiCl₃-(Endgruppen) und SiCl₂-Gruppen (unverzweigte Ketten- oder Cyclenabschnitte), die Signale im Bereich von -18 ppm bis -33 ppm ((3)) zeigen Signale von SiCl-Gruppen und vom Lösungsmittel SiCl₄ (ca. -19,6 ppm), wie sie z.B. im Dekachlorisotetrasilan auftreten, und die Signale im Bereich von -73 ppm bis -93 ppm sind auf quartäre Si-Atome der chlorierten Polysilane zurückzuführen, wie sie z.B. in Dodekachlorneopentasilan auftreten.
Die mittlere Molmasse wird nach Entfernen leichtflüchtiger Oligosilane unter Vakuum per Kryoskopie zu ca. 795 g/Mol ermittelt, was für das chlorierte Polysilan (SiCl₂)ₙ bzw. SiₙCl₂ₙ₊₂ einer mittleren Kettenlänge von ca. n=8 für (SiCl₂)ₙ bzw. ca. n=7 für SiₙCl₂ₙ₊₂ entspricht. Das Verhältnis von Si zu Cl im Produktgemisch wird nach Aufschluss durch Chlorid-Titration nach MOHR zu Si:Cl=1:2(entspricht der empirischen (analytischen) Formel SiCl₂) ermittelt. Das Signal bei ca. -19,6 ppm stammt vom Lösungsmittel Tetrachlorsilan. Niedermolekulare Cyclosilane konnten in den Gemischen per RAMAN-Spektroskopie durch intensive Banden im Bereich von 132 cm⁻¹ nachgewiesen werden. Das Vorliegen von Cyclosilanen zeigen in den ²⁹Si-NMR-Spektren die Signale bei δ= -1,6 ppm (Si₅Cl₁₀) und δ= -2,7 ppm (Si₆Cl₁₂).

### Ausführungsbeispiel 3

125 g SiCl₄ werden in ein Quarzglasrohr, welches mit einem Gefälle von ca. 30° durch einen Ofen geführt wird, eingetropft, verdampft und der SiCl₄-Dampf durch eine 10 cm lange, auf 1200°C geheizte Siliciumschüttung geleitet, wobei der Prozessdruck auf ca. 1013 hPa konstant gehalten wird. Das Produktgasgemisch wird nach Verlassen der geheizten Zone an den auf 20°C gekühlten Quarzglaswänden kondensiert und fließt größtenteils in einen auf 0°C gekühlten Vorlagekolben ab. Nach 4h 30min wird das bräunliche Produkt durch Lösen in wenig SiCl₄ aus dem Reaktor entfernt und filtriert. Nach Entfernen des SiCl₄ unter Vakuum bleiben 10 g chloriertes Polysilan in Form einer schwachgelben öligen Flüssigkeit zurück.

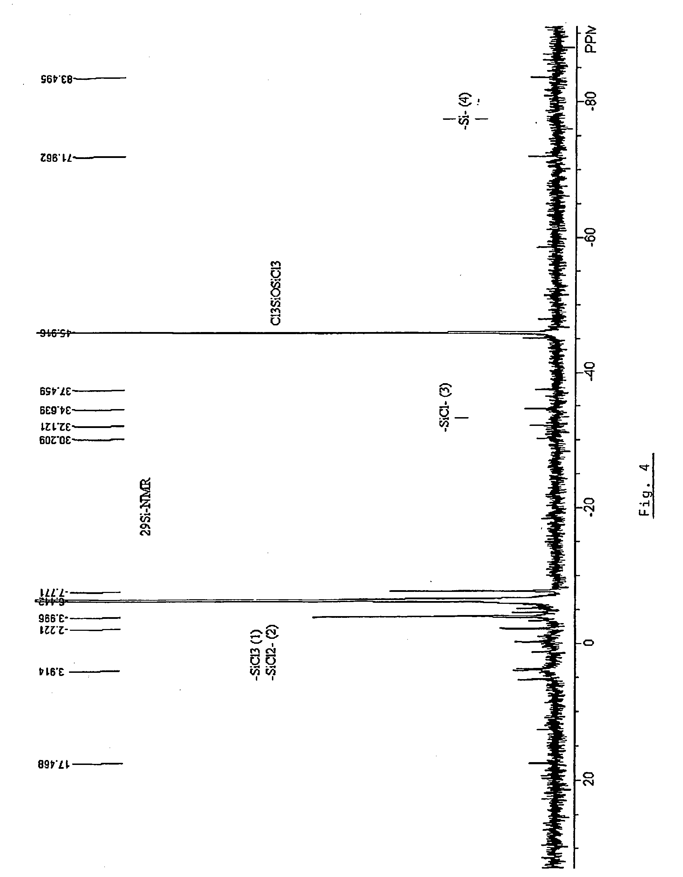

Die typischen ²⁹Si-NMR-Verschiebungen und der Gehalt verschiedener, kurzkettiger verzweigter Verbindungen, z.B. Dekachlorisotetrasilan (u.a. δ=-32 ppm), Dodekachlorneopentasilan (u.a. δ=-80 ppm) (diese Signale kommen im Verschiebungsbereich bei (3), der typisch ist für Signale von Si-C1-Gruppen (tertiäre Si-Atome), und (4), der typisch ist für Signale von Si-Gruppen mit ausschließlich Si-Substituenten (quartäre Si-Atome)), sind anhand von folgendem Spektrum (Fig.4) ersichtlich. Durch Integration der ²⁹Si-NMR-Spektren zeigt sich, dass der Gehalt an Siliciumatomen, die genannte Verzweigungsstellen (tertiäre und quartäre Si-Atome) des kurzkettigen Anteiles bilden, bezogen auf das gesamte Produktgemisch 1,1 Massen-% beträgt und damit größer als 1 Massen-% ist. Die chemischen Verschiebungen im ²⁹Si-NMR-Spektrum bei +23 ppm bis -13 ppm ((1) und (2)) zeigen Signale von SiCl₃-(Endgruppen) und SiCl₂-Gruppen (unverzweigte Ketten- oder Cyclenabschnitte), die Signale im Bereich von -18 ppm bis -33 ppm ((3)) zeigen Signale von SiCl-Gruppen, wie sie z.B. im Dekachlorisotetrasilan auftreten, und die Signale im Bereich von -73 ppm bis -93 ppm sind auf quartäre Si-Atome der chlorierten Polysilane zurückzuführen, wie sie z.B. in Dodekachlorneopentasilan auftreten.

Die mittlere Molmasse wird per Kryoskopie zu ca. 315 g/Mol ermittelt, was für das chlorierte Polysilan (SiCl₂)ₙ bzw. SiₙCl₂ₙ₊₂ einer mittleren Kettenlänge von ca. n=3,2 für (SiCl₂)ₙ bzw. ca. n=2,4 für SiₙCl₂ₙ₊₂ entspricht. Das Verhältnis von Si zu Cl im Produktgemisch wird nach Aufschluss durch Chlorid-Titration nach MOHR zu Si:Cl=1:2,8 (entspricht der empirischen (analytischen) Formel SiCl_{2,8}) ermittelt. Das Signal im ²⁹Si-NMR-Spektrum bei ca. -46 ppm stammt vom Lösungsmittel Hexachlordisiloxan.

## Patentansprüche

1. Halogeniertes Polysilan als reine Verbindung oder Gemisch von Verbindungen mit jeweils mindestens einer direkten Bindung Si-Si, deren Substituenten aus Halogen bestehen und in deren Zusammensetzung das Atomverhältnis Substituent: Silicium mindestens 1:1 beträgt, **dadurch gekennzeichnet, dass** das Polysilan aus Ringen und Ketten mit einem hohen Anteil Verzweigungsstellen besteht, der bezogen auf das gesamte Produktgemisch > 1 % beträgt, ein RAMAN-Molekülschwingungsspektrum von I₁₀₀/ I₁₃₂ < 1 aufweist, wobei I₁₀₀ die Raman-Intensität bei 100 cm⁻¹ und I₁₃₂ die Raman-Intensität bei 132 cm⁻¹ bedeuten, und in ²⁹Si-NMR-Spektren seine signifikanten Produktsignale im chemischen Verschiebungsbereich von +23 ppm bis -13 ppm, von -18 ppm bis -33 ppm und von -73 ppm bis -93 ppm besitzt.

2. Halogeniertes Polysilan nach Anspruch 1, **dadurch gekennzeichnet, dass** es überwiegend verzweigte Ketten enthält.

3. Halogeniertes Polysilan nach Anspruch 1 oder 2, **dadurch gekennzeichnet, dass** dessen Substituenten ausschließlich aus Halogen bestehen.

4. Halogeniertes Polysilan nach einem der vorangehenden Ansprüche, **dadurch gekennzeichnet, dass** die mittlere Kettenlänge des Rohgemisches des halogenierten Polysilans n = 3-9 entspricht.

5. Halogeniertes Polysilan nach einem der vorangehenden Ansprüche, **dadurch gekennzeichnet, dass** es ölig bis zähviskos ist.

6. Halogeniertes Polysilan nach einem der vorangehenden Ansprüche, **dadurch gekennzeichnet, dass** es eine schwachgelbe bis intensiv orange oder rotbraune Farbe besitzt.

7. Halogeniertes Polysilan nach einem der vorangehenden Ansprüche, **dadurch gekennzeichnet, dass** es in inerten Lösungsmitteln leicht löslich ist.

8. Verfahren zum Herstellen von halogeniertem Polysilan nach einem der vorangehenden Ansprüche, bei dem Halogensilan mit Silicium bei hohen Temperaturen umgesetzt wird, **dadurch gekennzeichnet, dass** mit einem Überschuss von Halogensilan in Bezug auf das gebildete Dihalogensilylen (SiX₂) gearbeitet wird.

9. Verfahren nach Anspruch 8, **dadurch gekennzeichnet, dass** bei einer Temperatur von über 700°C gearbeitet wird.

10. Verfahren nach Anspruch 8 oder 9, **dadurch gekennzeichnet, dass** die Verweildauer des Halogensilans in einer Schüttung des verwendeten Siliciums auf die Korngröße des Siliciums abgestimmt wird.

11. Verfahren nach einem der Ansprüche 8 bis 10, **dadurch gekennzeichnet, dass** in einem Druckbereich von 0,1-1000 hPa gearbeitet wird.

12. Verfahren nach einem der Ansprüche 8 bis 11, **dadurch gekennzeichnet, dass** die Reaktorteile, an denen das halogenierte Polysilan abgeschieden werden soll, auf einer Temperatur von -70 °C bis 300 °C, insbesondere -20 °C bis 280 °C, gehalten werden.

## Claims

1. Halogenated polysilane as a pure compound or as a mixture of compounds each having at least one direct Si-Si bond, whose substituents consist of halogen and in whose composition the atomic ratio substituent:silicon is at least 1:1, **characterized in that** the polysilane consists of rings and chains with a high proportion of branching sites which, based on the total product mixture, is > 1%, has a RAMAN molecular vibration spectrum of I₁₀₀/I₁₃₂ < 1, where I₁₀₀ denotes the Raman intensity at 100 cm⁻¹ and I₁₃₂ denotes the Raman intensity at 132 cm⁻¹, and in the ²⁹Si NMR spectra has its significant product signals in the chemical shift range from +23 ppm to -13 ppm, from -18 ppm to -33 ppm and from -73 ppm to -93 ppm.

2. Halogenated polysilane according to Claim 1, **characterized in that** it mainly contains branched chains.

3. Halogenated polysilane according to Claim 1 or 2, **characterized in that** its substituents consist exclusively of halogen.

4. Halogenated polysilane according to one of the preceding claims, **characterized in that** the average chain length of the crude mixture of the halogenated polysilane corresponds to n = 3-9.

5. Halogenated polysilane according to one of the preceding claims, **characterized in that** it is oily to viscous.

6. Halogenated polysilane according to one of the preceding claims, **characterized in that** it has a slightly yellow to intensively orange or red-brown color.

7. Halogenated polysilane according to one of the preceding claims, **characterized in that** it is readily soluble in inert solvents.

8. Process for preparing halogenated polysilane according to one of the preceding claims, in which halosilane is reacted with silicon at high temperatures, **characterized in that** the reaction is carried out with an excess of halosilane with respect to the dihalosilylene (SiX₂) formed.

9. Process according to Claim 8, **characterized in that** it is carried out at a temperature of over 700°C.

10. Process according to Claim 8 or 9, **characterized in that** the retention time of the halosilane in a packed bed of the silicon used is adjusted to the grain size of the silicon.

11. Process according to one of Claims 8 to 10, **characterized in that** it is carried out in a pressure range from 0.1-1000 hPa.

12. Process according to one of Claims 8 to 11, **characterized in that** the reactor parts on which the halogenated polysilane is to be deposited are kept at a temperature of -70°C to 300°C, in particular - 20°C to 280°C.

## Revendications

1. Polysilane halogéné sous forme de composé pur ou de mélange de composés, présentant à chaque fois au moins une liaison directe Si-Si, dont les substituants sont constitués d'halogène et dont le rapport atomique substituant: silicium dans la composition vaut au moins 1:1, **caractérisé en ce que** le polysilane est constitué de cycles et de chaînes présentant une proportion élevée de sites de ramification qui vaut, par rapport à la totalité du mélange de produits, > 1%, présente un spectre d'oscillation moléculaire de RAMAN de I₁₀₀/I₁₃₂ < 1, I₁₀₀ signifiant l'intensité de Raman à 100 cm⁻¹ et I₁₃₂ l'intensité de Raman à 132 cm⁻¹, et possède dans les spectres ²⁹Si-RMN ses signaux de produit significatifs dans la plage de déplacement chimique de +23 ppm à -13 ppm, de -18 ppm à -33 ppm et de -73 ppm à -93 ppm.

2. Polysilane halogéné selon la revendication 1, **caractérisé en ce qu'**il contient principalement des chaînes ramifiées.

3. Polysilane halogéné selon la revendication 1 ou 2, **caractérisé en ce que** ses substituants sont constitués exclusivement d'halogène.

4. Polysilane halogéné selon quelconque l'une des revendications précédentes, **caractérisé en ce que** la longueur moyenne de chaîne du mélange brut du polysilane halogéné correspond à n = 3-9.

5. Polysilane halogéné selon quelconque l'une des revendications précédentes, **caractérisé en ce qu'**il est huileux à visqueux.

6. Polysilane halogéné selon quelconque l'une des revendications précédentes, **caractérisé en ce qu'**il présente une couleur jaune pâle à orange intense ou rouge-brun.

7. Polysilane halogéné selon quelconque l'une des revendications précédentes, **caractérisé en ce qu'**il est facilement soluble dans des solvants inertes.

8. Procédé pour la préparation de polysilane halogéné selon l'une quelconque des revendications précédentes, dans lequel l'halogénosilane est transformé avec du silicium à des températures élevées, **caractérisé en ce qu'**on travaille avec un excès d'halogénosilane par rapport au dihalogénosilylène (SiX₂) formé.

9. Procédé selon la revendication 8, **caractérisé en ce qu'**on travaille à une température supérieure à 700°C.

10. Procédé selon la revendication 8 ou 9, **caractérisé en ce que** la durée de séjour de l'halogénosilane dans un matériau en vrac du silicium utilisé est adaptée à la granulométrie du silicium.

11. Procédé selon l'une quelconque des revendications 8 à 10, **caractérisé en ce qu'**on travaille dans une plage de pression de 0,1-1000 hPa.

12. Procédé selon l'une quelconque des revendications 8 à 11, **caractérisé en ce que** les pièces de réacteur sur lesquelles le polysilane halogéné doit être déposé sont maintenues à une température de -70°C à 300°C, en particulier de -20°C à 280°C.
